# EUROPEAN PATENT SPECIFICATION

(11) **EP 3 018 799 B1**
(45) Date of publication and mention of the grant of the patent: **15.04.2020**
(21) Application number: 15193679.6
(22) Date of filing: 09.11.2015
(51) Int. Cl.: H02K 5/14, H01R 39/38

(54) **SPRING POST FOR BRUSH CARD FOR A POWER TOOL**
FEDERSTÄNDER FÜR DIE BÜRSTENKARTE FÜR EIN ELEKTROWERKZEUG
CARTE POUR BROSSE DE TIGE À RESSORT DESTINÉE À UN OUTIL ÉLECTRIQUE

(30) Priority: 07.11.2014 US 201462076940 P
(43) Date of publication of application: 11.05.2016
(73) Proprietor: Black & Decker Inc., New Britain, CT 06053 (US)
(72) Inventor: Heck, Daniel, F, Baltimore, MD Maryland 21230 (US); Osborne, Stephen P., Pikesville, MD Maryland 21208 (US); Dunston, Jarrett A., Owings Mills, MD Maryland 21117 (US)
(74) Representative: SBD IPAdmin

(56) References cited:
- EP-A1- 2 858 220
- JP-A- 2008 172 943
- JP-U- S6 441 689
- US-A- 6 133 665
- US-A1- 2004 245 886
- US-A1- 2004 245 889
- US-A1- 2008 303 358

## Description

This utility application claims the benefit of U.S. Provisional Application No. 62/076,940 filed November 7, 2014.The present disclosure relates to a brush assembly for electric motors, and more particularly to a brush assembly for motors used in electric power tools.

The statements in this section merely provide background information related to the present disclosure and may not constitute prior art.

Known portable power tools typically have an electric motor received within a tool housing. One common type of electric motor used in power tools has a rotor, a stator, and brushes. The rotor includes a rotor shaft, laminations mounted on the rotor shaft, armature windings wound in slots in the lamination stack, and a commutator mounted on the rotor shaft and electrically connected to the armature windings. The stator may have field windings wound in laminations, or may have permanent magnets. The brushes are mounted in brush housings, often known as brush boxes or brush holders, in sliding electrical contact with the commutator. Electric current is supplied from a power source through the brushes to the commutator, and from the commutator to the armature windings.

The brushes and brush holders are typically part of a brush assembly(ies). The brush holders and brushes are disposed diametrically opposite to each other with the commutator disposed therebetween. The brush assembly(ies) includes springs that urge the brushes against the commutator. Exemplary brush assemblies may utilize two or four brushes around the commutator.

Power tool are often used in harsh work environments and are susceptible to user drop and other impact. It is important to protect the internal components of the power tool, including the power tool motor, against damage in the event of drops.

WO2013/175624 describes a brush card for a power tool according to the preamble of claim 1. US 2008/303358 discloses a motor housing with a brush plate covered by a pivotable cover. JP S64 41689 U discloses a motor and motor housing. US 6133665 discloses a brush system for electric motors. US 2004/0245886 discloses a brush holder device for a dynamoelectric machine.

According to an embodiment of the invention, an electric motor comprising the features of claim 1 is provided.

In an embodiment, the brush includes two curved surfaces with a groove formed therebetween. In an embodiment, a distal end of the leg of the spring engages the groove of the brush. In an embodiment, the distal end of the leg of the spring includes a hook engaging the groove of the brush.

In an embodiment, the brush holder includes an opening that is open-ended on a distal end of the brush holder and extends radially to accommodate the back and forth movement of the spring.

In an embodiment, the brush assembly comprises four brush holders housing four brushes.

In an embodiment, the brush assembly includes a housing portion substantially cylindrically shaped and extending from the brush card mount, the housing portion being arranged to mate with an end or around an outer surface of the motor stator.

According to an embodiment, a power tool is provided including a housing and the electric motor described above.
Fig. 1 depicts a perspective side view of a brush assembly (also referred to herein as brush card), according to an embodiment;
Fig. 2 depicts a top view of the brush card, according to an embodiment;
Fig. 3 depicts a perspective view of a spring of the brush card, according to an embodiment;
Fig. 4 depicts a perspective zoomed-in view of the brush and brush holder, according to an embodiment;
Fig. 5 depicts a side view of an electric motor including the brush card, according to an embodiment;
Fig. 6 depicts a cross-sectional view of the electric motor of Fig. 5, according to an embodiment;
Fig. 7 depicts a perspective view of a power tool having the electric motor, according to an embodiment; and
Fig. 8 depicts the power tool of Fig. 7 with a motor cover removed, according to an embodiment.

Reference will now be made in detail to various aspects and embodiments of the invention, examples of which are illustrated in the accompanying drawings.

A four-pole brush card for a power tool is described in detail in Patent Application No. 14/453,706, filed August 7, 2014. The present disclosure is directed to an improvement of the four-pole brush card according to an embodiment.

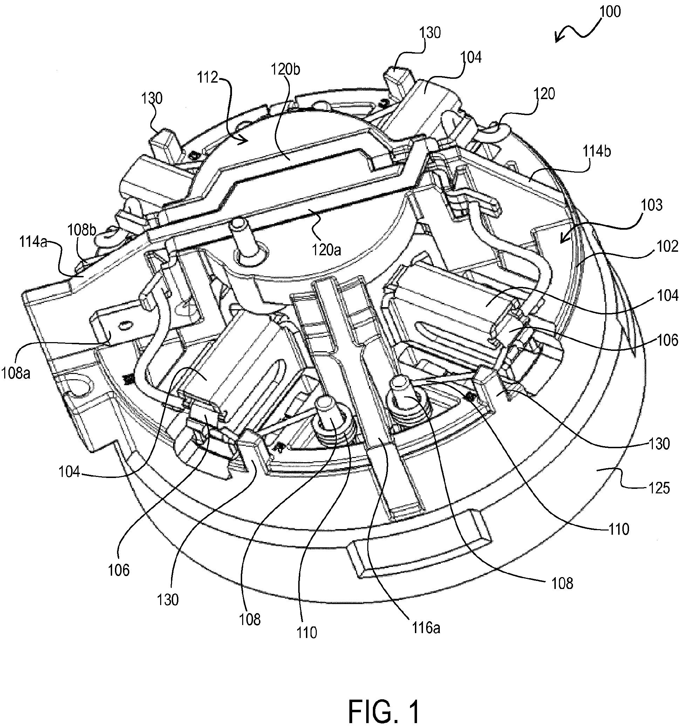

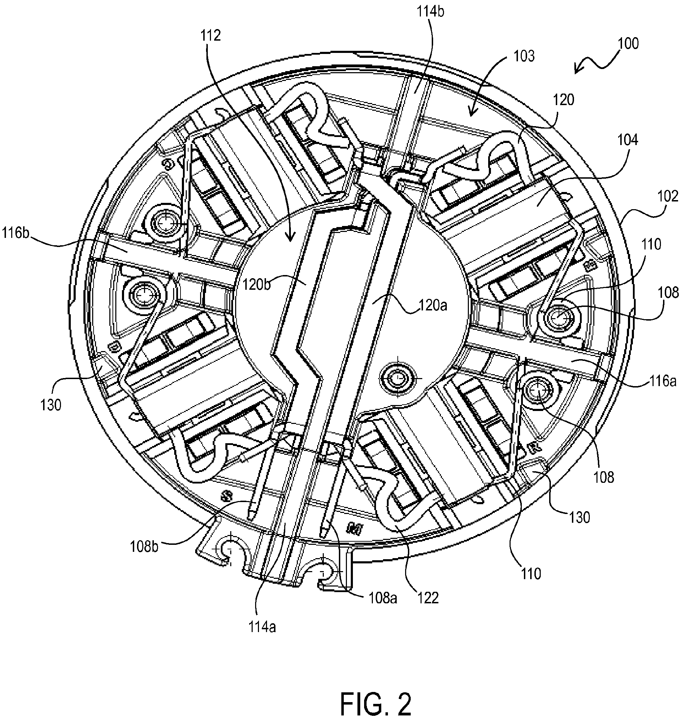

Figs. 1 and 2 depict a brush assembly 100 (also referred to as brush card) according to an embodiment of the invention. In this embodiment, like the embodiments disclosed in Patent Application No. 14/453,706, the brush assembly 100 includes a brush card mount 102 and four brush holders 104. The brush card mount 102 has a substantially circular circumference and the four brush holders 104 are arranged equidistantly on four sides of the brush card mount 102. Each brush holder 104 accommodates a brush 106 therein. The brushes 106 housed in brush holders 104 facing each other are electrically connected to one another, as discussed below. Both ends of each brush holder 104 are open to allow radial movement of the brush 106 towards and away from a center of the brush card 100. The brush card mount 102 includes upright posts 108 in close proximity to the brush holders 104. Each post 108 is arranged to hold a wound portion of a spring 110. Each spring 110 includes an extended arm that engages a back surface of brush 106 inside the brush holder 104 to bias the brush 106 towards the center of the brush card 100.

According to an embodiment, brush card mount 102 includes a planar portion 103, to which brush holders 104 are secured. A middle section of the planar portion 103 includes an opening that receives a motor commutator (not shown). The brush card mount 102 also includes a bridge portion 112 arranged above the commutator opening (and the commutator) and connected to the planar portion via four bridge legs 114a, 114b, 116a, and 116b. Bridge legs 114a, 114b, 116a, and 116b extend longitudinally (i.e., in the direction of the motor, at a substantially right angle with respect to the plane of the brush card mount 102) from the planar portion 103 to the bridge portion 112. Radially formed between bridge legs 114a, 114b, 116a, and 116b are gaps that allow for the radial movement of brushes 106.

In an embodiment, each brush holder 104 includes two radial openings on its outer (vertical) walls. One radial opening is disposed adjacent the spring post 108 to allow the spring 110 to radially bias the brush 106 toward the commutator. The other radial opening is to facilitate a wire connection to the brush.

According to an embodiment, bridge leg 114a and 114b form walls that extend radially from the bridge portion 112 to (or near) outer edges of the brush card mount 102. In an embodiment, the bridge legs 116a and 116b similarly extend towards (or near) outer edges of the brush card mount 102. This arrangement strengthens support for the bridge portion 112. In addition, bridge leg 114a mechanically supports and electrically isolates two terminals 118a and 118b provided on both sides of its outward-extending wall. Terminals 118a and 118b are connected to metal routings 120a and 120b, which extend over the bridge portion 112 to bridge leg 114b. Metal routings 120a and 120b connect the brushes 106 facing each other to one of the terminals 118a and 118b. Specifically, ends of metal routings 120a and 120b are connected via wires 122 to either corresponding brush holders 104 or brushes 106. In an embodiment, metal routing 120a crosses over routing 120b to allow for opposite brushes 106/brush holders 104 to be connected to the same terminal 118a or 118b.

In an embodiment, the brush assembly also includes a housing portion 125 attached to the brush card mount 102. The housing portion 125 may be provided as a separate piece, on which the brush card mount 102 is mounted. Alternatively, the housing portion 125 may be provided integrally with the brush card mount 102 as a single molded piece. In an embodiment, housing portion is substantially cylindrical shaped, sized to mate with (or fit around) a motor stator. Alternatively the housing portion 125 comprises a housing (i.e., can) for the entire motor assembly.

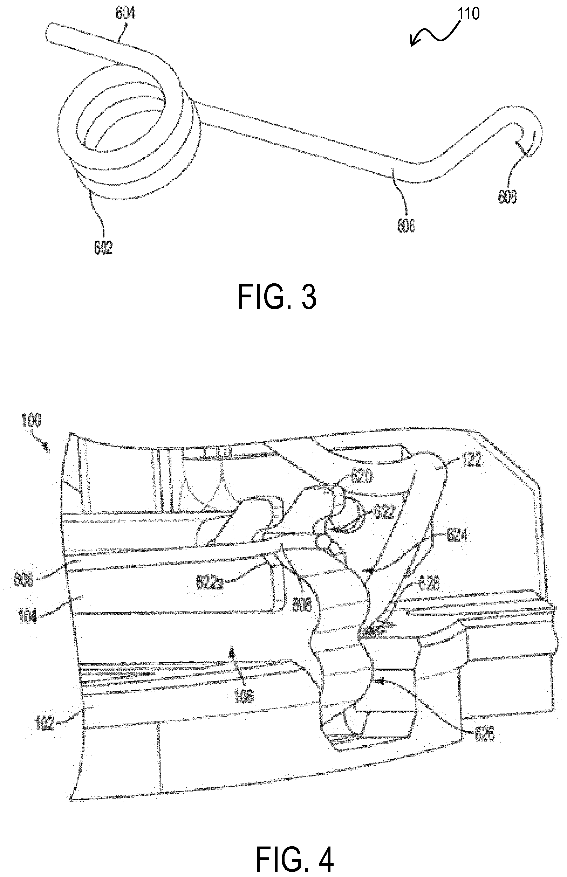

Fig. 3 depicts a spring 110, according to an embodiment. Spring 110 includes a wound portion 602, a first leg 604, and a second leg 606 that is longer than the first leg 604 and includes a hook 608 at its distal end.

Fig. 4 depicts a perspective view of a brush 106 inside the brush holder 104. In an embodiment, hook 608 of the spring 110 engages a recess 622 of end portion 620 of the brush holder 104 during the assembly process. Once the motor is fully assembled and the commutator is placed inside the brush card 100, the hook 608 and the second leg 606 are pulled down to engage the rear surface of the brush 106.

In an embodiment, the rear surface of the brush 106 includes two humped surfaces 624 and 626 and a groove 628 therebetween. In an embodiment, the hook 608 is pulled down to engage the groove 628 to complete the assembly process. In this embodiment, each the humped surfaces 624 may be semi-circular shaped, although a cam surface may be utilized to optimize the movement of the hook 608 over the humped surface 624.

It was found that in power tool application incorporating the brush assembly 100 of the invention, the tip of the spring 110 would at times disengage the brush 106 during drop tests. This is largely due to the relatively heavy mass of the brush 106 overcoming the spring 104 force during impact. In such circumstances, the spring may engage the brush or the brush holder at an incorrect position, or even dislocate out of position completely.

One obvious solution to this problem is to use springs with higher spring force. However this solution is not practical because the spring force should be optimized for effective motor commutation without damaging the brushes and prolonging the brush life.

Referring back to Figs. 1 and 2, in order to solve this problem, according to an embodiment of the invention, a spring stop post 130 is provided in the vicinity of each brush holder 104 to limit the movement of the spring 110 away from the brush 106. In this embodiment, the stop post 130 is arranged near the outer periphery of the brush card mount 102. Alternatively, stop post 130 may project from the housing portion 125 through slots on the outer periphery of the brush card mount 120. The stop post 130 is circumferentially located between the spring post 108 and the brush holder 104 (i.e., within the angle formed between the brush holder 104 and the spring post 108 relative to the center of the brush assembly 100). In an embodiment, the stop post 130 is provided adjacent spring leg 606 (see Fig. 3) of spring 110 to limit an outward movement of spring leg 606. In an embodiment, the stop post 130 may come in contact with a middle portion or distal end of the leg 606 of the spring 110.

In an embodiment, the stop post 130 blocks the spring 110 from backing out of its proper position relative to the brush 106. In an embodiment, the stop post 130 limits the movement of the spring 110 too far out of brush groove 628. Specifically, the stop post 130 is positioned just close enough to the brush holder 104 and spring 110 to allow the spring 110 to be moved into its proper position within the brush groove 628 during motor assembly, but to also to limit movement of the spring 110 too far out of the brush groove 628 in the event of a drop. In an embodiment, leg 606 of the spring 110 makes contact with the stop post 130 if the leg 606 moves too far radially from the brush groove 628. It has been shown that during drop tests, the stop posts limits the radial movement of the spring 110 and forces the spring 110 to reengage the brush groove 628.

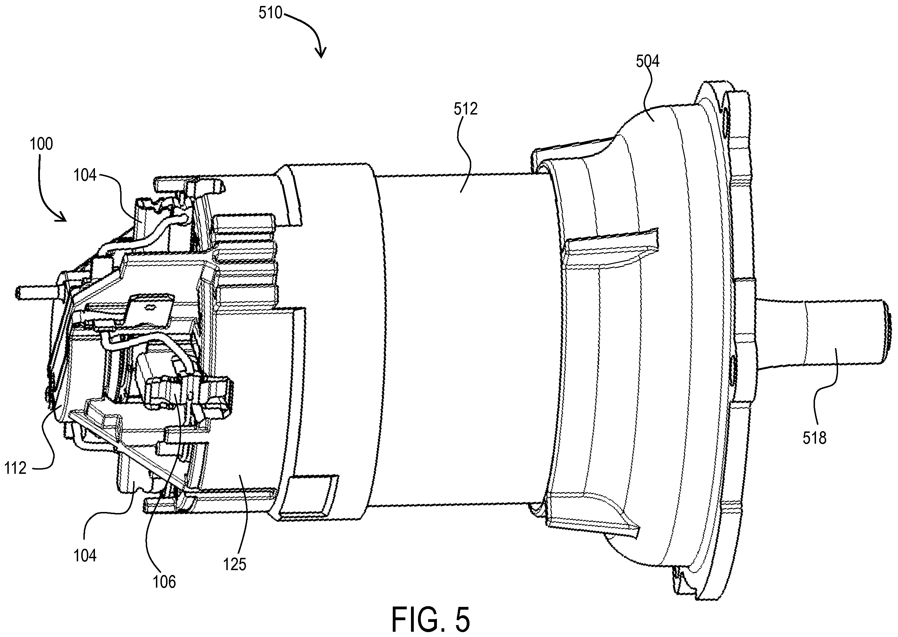

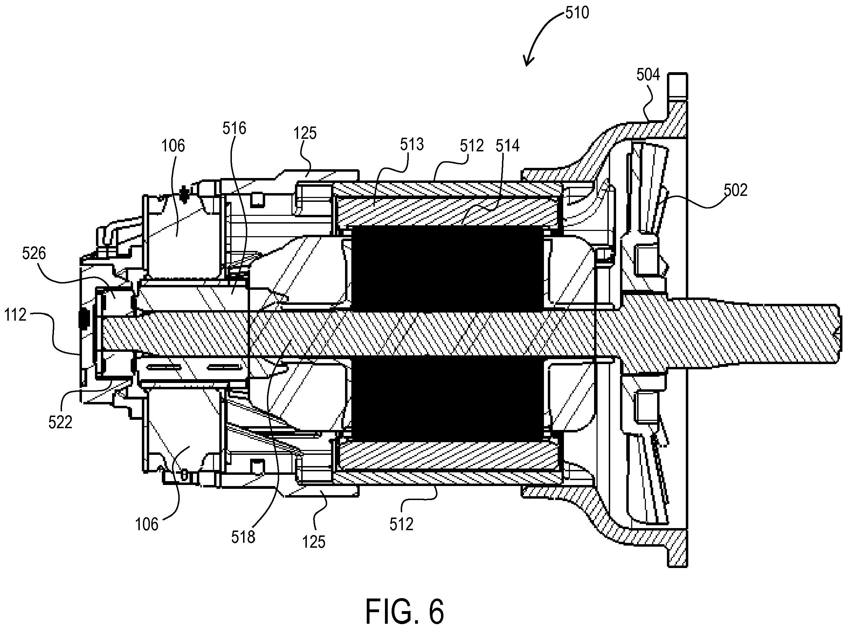

Fig. 5 depicts a side view of an electric motor 510 including the brush assembly 100 described above, according to an embodiment. Fig. 6 depicts a cross-sectional view of the same motor 510. Motor 510, in an embodiment, includes a stator (or field can) 512 and an armature (or rotor) 514 disposed within the stator 512. The stator 512 may include, for example, a number of permanent magnets 513 affixed therein. An armature shaft 518 is secured to the rotor 514. A commutator 516 is mounted on the shaft 518 such that the armature 514, the commutator 516, and the shaft 528 are all rotatably coupled. A fan 502 is also mounted to another end of the shaft 518 and housed by a cup 504.

In an embodiment, brush assembly 100 is mounted on an end of the stator 512 such that the housing portion 125 partially covers an outer surface of the stator 512. Alternatively, the housing portion 125 may mate with an end of the stator 512 via, for example, screws or other fastening means. The brush holders 104 are in this manner arranged around the commutator 516, allowing the brushes 106 to make contact with the commutator 516. An end bearing 520 of the shaft 518 is housed within a bearing pocket 522 on an underside of the bridge portion 512 of the brush assembly 100.

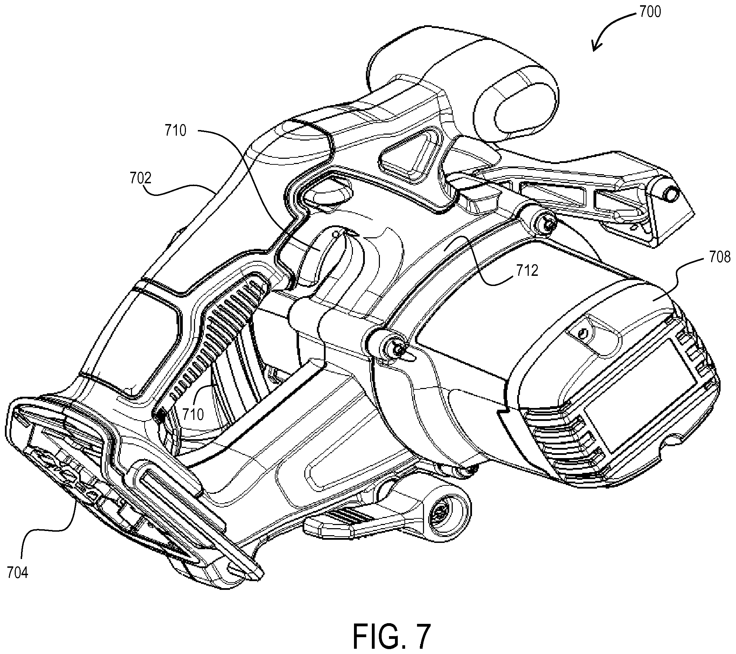

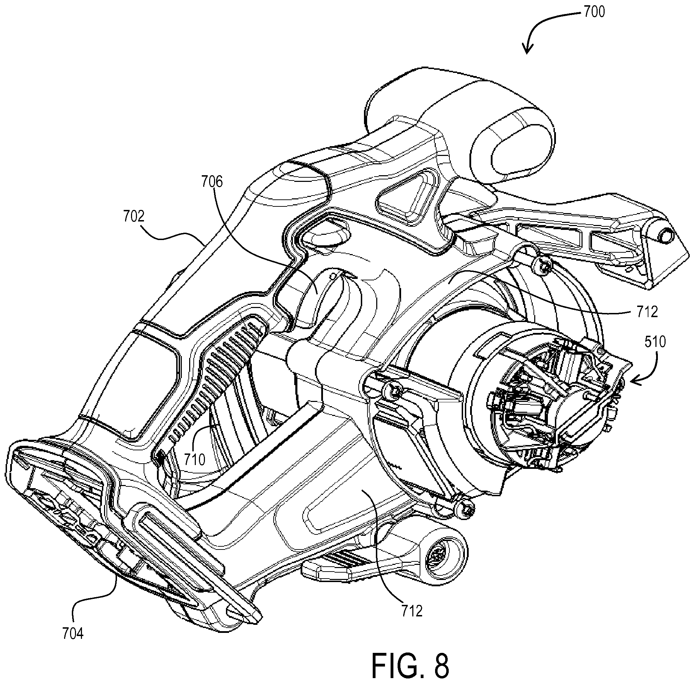

Fig. 7 depicts a perspective view of a power tool 700 including the motor 510 described above, according to an embodiment. Power tool 700 in this example is a circular saw, though it should be understood that the circular saw is illustrated herein by way of example and the motor 510 of the invention with the brush assembly 100 described above may be utilized in any power tool, including, but not limited to, drills, impact drivers, miter saws, chop saws, grinders, hammer drills, cutters, nailers, etc. In an embodiment, power tool 700 may be a DC (direct current) handheld electric tool having a housing 712 with a handle portion 702 accommodating a trigger switch 706 and a battery receiving portion 704. It must be understood, however, that the power tool 700 may alternatively be an AC (alternating current) power tool powered via an AC cord, or an AC/DC power tool. Power tool 700 further includes a motor cover 708 and a saw abrasive guard 710. Motor 510 is rotatable coupled to a saw disc housed within the guard 710. Fig. 8 depicts the same view of power tool 700, with the motor cover 708 removed for illustration purposes.

The description of the invention is merely exemplary in nature and, thus, variations that do not depart from the gist of the invention are intended to be within the scope of the invention. Such variations are not to be regarded as a departure from the scope of the invention. It is noted that while the exemplary embodiment herein is described with reference to a four-pole brush assembly, the stop post of the present disclosure may be utilized with any brush assembly such as a two-pole brush assembly. Furthermore, it is noted that while the exemplary embodiment herein is described with reference to a two-piece brush holder, any type of brush holder such may be used in combination with the stop post.

## Claims

1. An electric motor (510) comprising:
a stator (512);
an armature (514) rotatably received within the stator, the armature having an armature shaft (518) on which a commutator (516) is mounted; and
a brush assembly (100) comprising:
a brush card mount (102) disposed around the commutator;
a brush holder (104) mounted on a surface of the brush card mount;
a brush (106) disposed within the brush holder in sliding contact with the commutator to supply electric current to the commutator;
a spring post (108) projecting from the brush card mount;
a torsion spring (110) having a wound portion (602) secured around the spring post adjacent the brush holder, and having a leg (606) arranged to engage a back surface of the brush; and
a spring stop post (130) disposed proximate an outer periphery of the brush card mount, substantially adjacent the leg (606) of the spring (110), the spring stop post being circumferentially located between the spring post and the brush holder within an angle formed between the brush holder and the spring post relative to a center of the brush card mount, to limit an outward movement of the leg (606) of the spring away from the back surface of the brush (106), wherein the spring stop post is engageable with a middle portion or distal end of the leg (606) of the spring.

2. The electric motor of claim 1, wherein the brush includes two curved surfaces (624, 626) with a groove (628) formed therebetween.

3. The electric motor of claim 2, wherein a distal end of the leg of the spring engages the groove of the brush.

4. The electric motor of claim 3, wherein the distal end of the leg of the spring comprises a hook (608) engaging the groove of the brush.

5. The electric motor of claim 1, wherein the brush holder includes an opening that is open-ended on a distal end of the brush holder and extends radially to accommodate the back and forth movement of the spring.

6. The electric motor of claim 1, wherein the brush assembly comprises four brush holders housing four brushes.

7. The electric motor of claim 1, further comprising a housing portion (125) substantially cylindrically shaped and extending from the brush card mount, the housing portion being arranged to mate with an end or around an outer surface of the motor stator.

8. A power tool (700) comprising:
a housing (712); and
an electric motor (510) disposed within the housing, the motor including: a stator (512);
an armature (514) rotatably received within the stator, the armature having an armature shaft (518) on which a commutator (516) is mounted; and a brush assembly (100),
wherein the brush assembly comprises:
a brush card mount (102) disposed around the commutator;
a brush holder (104) mounted on a surface of the brush card mount;
a brush (106) disposed within the brush holder in sliding contact with the commutator to supply electric current to the commutator;
a spring post (108) projecting from the brush card mount;
a torsion spring (110) having a wound portion (602) secured around the spring post adjacent the brush holder,and having a leg (606) arranged to engage a back surface of the brush; and
a spring stop post (130) disposed proximate an outer periphery of the brush card mount, substantially adjacent the leg (606) of the spring (110), the spring stop post being circumferentially located between the spring post and the brush holder within an angle formed between the brush holder and the spring post relative to a centre of the brush card mount, to limit an outward movement of the leg of the spring away from the back surface of the brush (106), wherein the spring stop post is engageable with a middle portion or distal end of the leg (606) of the spring.

9. The power tool of claim 8, wherein the brush includes two curved surfaces (624, 626) with a groove (628) formed therebetween.

10. The power tool of claim 9, wherein a distal end of the leg of the spring engages the groove of the brush.

11. The power tool of claim 8, the brush assembly further comprising a housing portion (125) substantially cylindrically shaped and extending from the brush card mount, the housing portion being arranged to mate with an end or around an outer surface of the motor stator.

## Patentansprüche

1. Elektrischer Motor (510), umfassend:
einen Stator (512);
einen Anker (514), der im Innern des Stators drehbar aufgenommen ist, wobei der Anker eine Ankerwelle (518) aufweist, an der ein Kommutator (516) montiert ist; und
eine Bürstenbaugruppe (100), umfassend:
eine Bürstenbrückenhalterung (102), die um den Kommutator herum angeordnet ist;
einen Bürstenhalter (104), der auf einer Oberfläche der Bürstenbrückenhalterung montiert ist;
eine Bürste (106), die im Innern des Bürstenhalters in Gleitkontakt mit dem Kommutator angeordnet ist, um den Kommutator mit elektrischem Strom zu versorgen;
eine Federstütze (108), die von der Bürstenbrückenhalterung aus vorsteht;
eine Torsionsfeder (110), die einen umwickelten Abschnitt (602) aufweist, der um die Federstütze herum neben dem Bürstenhalter gesichert ist, und die einen Schenkel (606) aufweist, der eingerichtet ist, um mit einer Rückfläche der Bürste in Eingriff zu kommen; und
eine Federanschlagstütze (130), die in der Nähe einer äußeren Peripherie der Bürstenbrückenhalterung angeordnet ist, im Wesentlichen neben dem Schenkel (606) der Feder (110), wobei sich die Federanschlagstütze umfangsmäßig zwischen der Federstütze und dem Bürstenhalter in einem Winkel befindet, der zwischen dem Bürstenhalter und der Federstütze im Verhältnis zu einem Mittelpunkt der Bürstenbrückenhalterung gebildet ist, um eine Auswärtsbewegung des Schenkels (606) der Feder von der Rückfläche der Bürste (106) weg einzuschränken, wobei die Federanschlagstütze mit einem mittleren Abschnitt oder einem distalen Ende des Schenkels (606) der Feder in Eingriff gebracht werden kann.

2. Elektromotor nach Anspruch 1, wobei die Bürste zwei gekrümmte Oberflächen (624, 626) umfasst, wobei eine Nut (628) dazwischen gebildet ist.

3. Elektromotor nach Anspruch 2, wobei ein distales Ende des Schenkels der Feder mit der Nut der Bürste in Eingriff kommt.

4. Elektromotor nach Anspruch 3, wobei das distale Ende des Schenkels der Feder einen Haken (608) umfasst, der mit der Nut der Bürste in Eingriff kommt.

5. Elektromotor nach Anspruch 1, wobei der Bürstenhalter eine Öffnung umfasst, die an einem distalen Ende des Bürstenhalters offen ist und sich radial erstreckt, um sich der Hin- und Herbewegung der Feder anzupassen.

6. Elektromotor nach Anspruch 1, wobei die Bürstenbaugruppe vier Bürstenhalter umfasst, die vier Bürsten aufnehmen.

7. Elektromotor nach Anspruch 1, ferner umfassend einen Gehäuseabschnitt (125), der im Wesentlichen zylindrisch gestaltet ist und sich von der Bürstenbrückenhalterung aus erstreckt, wobei der Gehäuseabschnitt eingerichtet ist, um zu einem Ende oder um eine Außenfläche des Motorstators herum zu passen.

8. Elektrowerkzeug (700), umfassend:
ein Gehäuse (712); und
einen Elektrischer Motor (510), der in dem Gehäuse angeordnet ist, wobei der Motor umfasst:
einen Stator (512);
einen Anker (514), der im Innern des Stators drehbar aufgenommen ist, wobei der Anker eine Ankerwelle (518) aufweist, an der ein Kommutator (516) montiert ist; und
eine Bürstenbaugruppe (100),
wobei die Bürstenbaugruppe umfasst:
eine Bürstenbrückenhalterung (102), die um den Kommutator herum angeordnet ist;
einen Bürstenhalter (104), der auf einer Oberfläche der Bürstenbrückenhalterung montiert ist;
eine Bürste (106), die im Innern des Bürstenhalters in Gleitkontakt mit dem Kommutator angeordnet ist, um den Kommutator mit elektrischem Strom zu versorgen;
eine Federstütze (108), die von der Bürstenbrückenhalterung aus vorsteht;
eine Torsionsfeder (110), die einen umwickelten Abschnitt (602) aufweist, der um die Federstütze herum neben dem Bürstenhalter gesichert ist, und die einen Schenkel (606) aufweist, der eingerichtet ist, um mit einer Rückfläche der Bürste in Eingriff zu kommen; und
eine Federanschlagstütze (130), die in der Nähe einer äußeren Peripherie der Bürstenbrückenhalterung angeordnet ist, im Wesentlichen neben dem Schenkel (606) der Feder (110), wobei sich die Federanschlagstütze umfangsmäßig zwischen der Federstütze und dem Bürstenhalter in einem Winkel befindet, der zwischen dem Bürstenhalter und der Federstütze im Verhältnis zu einem Mittelpunkt der Bürstenbrückenhalterung gebildet ist, um eine Auswärtsbewegung des Schenkels der Feder von der Rückfläche der Bürste (106) weg einzuschränken, wobei die Federanschlagstütze mit einem mittleren Abschnitt oder einem distalen Ende des Schenkels (606) der Feder in Eingriff gebracht werden kann.

9. Elektrowerkzeug nach Anspruch 8, wobei die Bürste zwei gekrümmte Oberflächen (624, 626) umfasst, wobei eine Nut (628) dazwischen gebildet ist.

10. Elektrowerkzeug nach Anspruch 9, wobei ein distales Ende des Schenkels der Feder mit der Nut der Bürste in Eingriff kommt.

11. Elektrowerkzeug nach Anspruch 8, wobei die Bürstenbaugruppe ferner einen Gehäuseabschnitt (125) umfasst, der im Wesentlichen zylindrisch gestaltet ist und sich von der Bürstenbrückenhalterung aus erstreckt, wobei der Gehäuseabschnitt eingerichtet ist, um zu einem Ende oder um eine Außenfläche des Motorstators herum zu passen.

## Revendications

1. Moteur électrique (510) comprenant :
un stator (512) ;
un induit (514) reçu de façon rotative dans le stator, l'induit présentant un arbre d'induit (518) sur lequel est monté un collecteur (516) ; et
un ensemble balais (100) comprenant :
un support de carte à balais (102) disposé autour du collecteur ;
un porte-balais (104) monté sur une surface du support de carte à balais ;
un balai (106) disposé dans le porte-balais en contact coulissant avec le collecteur pour fournir du courant électrique au collecteur ;
un montant de ressort (108) faisant saillie depuis le support de carte à balais ;
un ressort de torsion (110) présentant une partie enroulée (602) fixée autour du montant de ressort de façon adjacente au porte-balais, et présentant une branche (606) agencée pour venir en prise avec une surface arrière du balai ; et
un montant de butée de ressort (130) disposé à proximité d'une périphérie externe du support de carte à balais, de façon sensiblement adjacente à la branche (606) du ressort (110), le montant de butée de ressort étant situé circonférentiellement entre le montant de ressort et le porte-balais à l'intérieur d'un angle formé entre le porte-balais et le montant de ressort par rapport à un centre du support de carte à balais, pour limiter un mouvement vers l'extérieur de la branche (606) du ressort s'éloignant de la surface arrière du balai (106), dans lequel le montant de butée de ressort peut venir en prise avec une partie médiane ou une extrémité distale de la branche (606) du ressort.

2. Moteur électrique selon la revendication 1, dans lequel le balai inclut deux surfaces incurvées (624, 626) avec une rainure (628) formée entre celles-ci.

3. Moteur électrique selon la revendication 2, dans lequel une extrémité distale de la branche du ressort vient en prise avec la rainure du balai.

4. Moteur électrique selon la revendication 3, dans lequel l'extrémité distale de la branche du ressort comprend un crochet (608) venant en prise avec la rainure du balai.

5. Moteur électrique selon la revendication 1, dans lequel le porte-balais inclut une ouverture qui est ouverte sur une extrémité distale du porte-balais et s'étend radialement pour permettre le mouvement de va-et-vient du ressort.

6. Moteur électrique selon la revendication 1, dans lequel l'ensemble balais comprend quatre porte-balais logeant quatre balais.

7. Moteur électrique selon la revendication 1, comprenant en outre une partie boîtier (125) de forme sensiblement cylindrique et s'étendant à partir du support de carte à balais, la partie boîtier étant agencée pour s'accoupler avec une extrémité ou autour d'une surface externe du stator du moteur.

8. Outil électrique (700) comprenant :
un boîtier (712) ; et
un moteur électrique (510) disposé dans le boîtier, le moteur incluant : un stator (512) ;
un induit (514) reçu de façon rotative dans le stator, l'induit présentant un arbre d'induit (518) sur lequel est monté un collecteur (516) ; et un ensemble balais (100),
dans lequel l'ensemble balais comprend :
un support de carte à balais (102) disposé autour du collecteur ;
un porte-balais (104) monté sur une surface du support de carte à balais ;
un balai (106) disposé dans le porte-balais en contact coulissant avec le collecteur pour fournir du courant électrique au collecteur ;
un montant de ressort (108) faisant saillie depuis le support de carte à balais ;
un ressort de torsion (110) présentant une partie enroulée (602) fixée autour du montant de ressort de façon adjacente au porte-balais, et présentant une branche (606) agencée pour venir en prise avec une surface arrière du balai ; et
un montant de butée de ressort (130) disposé à proximité d'une périphérie externe du support de carte à balais, de façon sensiblement adjacente à la branche (606) du ressort (110), le montant de butée de ressort étant situé circonférentiellement entre le montant de ressort et le porte-balais à l'intérieur d'un angle formé entre le porte-balais et le montant de ressort par rapport à un centre du support de carte à balais, pour limiter un mouvement vers l'extérieur de la branche du ressort s'éloignant de la surface arrière du balai (106), dans lequel le montant de butée de ressort peut venir en prise avec une partie médiane ou une extrémité distale de la branche (606) du ressort.

9. Outil électrique selon la revendication 8, dans lequel le balai inclut deux surfaces incurvées (624, 626) avec une rainure (628) formée entre celles-ci

10. Outil électrique selon la revendication 9, dans lequel une extrémité distale de la branche du ressort vient en prise avec la rainure du balai.

11. Outil électrique selon la revendication 8, l'ensemble balais comprenant en outre une partie boîtier (125) de forme sensiblement cylindrique et s'étendant à partir du support de carte à balais, la partie boîtier étant agencée pour s'accoupler avec une extrémité ou autour d'une surface externe du stator du moteur.
